(19)

**Europäisches Patentamt**
**European Patent Office**
**Office européen des brevets**

(11) **EP 3 422 262 A1**

(12) **EUROPEAN PATENT APPLICATION**

(43) Date of publication:
**02.01.2019   Bulletin 2019/01**

(51) Int Cl.:
***G06N 99/00*** (2010.01)

(21) Application number: **17179159.3**

(22) Date of filing: **30.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Royal Holloway And Bedford New College**
**Egham, Surrey TW20 0EX (GB)**

(72) Inventors:
• **JORDANEY, Roberto**
**Egham, Surrey TW20 0EX (GB)**

• **SHARAD, Kumar**
**D-69115 Heidelberg (DE)**
• **DASH, Santanu Kumar**
**London, WC1E 6BT (GB)**
• **WANG, Zhi**
**Tianjin, 300071 (CN)**
• **PAPINI, Davide**
**50063 Figline Valdarno (FI) (IT)**
• **NOURETDINOV, Ilia**
**Egham, Surrey TW20 0EX (GB)**
• **CAVALLARO, Lorenzo**
**Egham, Suffolk TW20 0EX (GB)**

(74) Representative: **J A Kemp**
**14 South Square**
**Gray's Inn**
**London WC1R 5JJ (GB)**

(54) **METHOD OF MONITORING THE PERFORMANCE OF A MACHINE LEARNING ALGORITHM**

(57)    A crucial requirement for building sustainable learning models is to train on a wide variety of samples. Unfortunately, objects on which the learned models are used may evolve and the learned models may no longer work well. The invention provides a framework to identify aging classification models *in vivo* during deployment (concept drift), much before the machine learning model's performance starts to degrade. A statistical comparison of samples seen during deployment with those used to train the model is used, thereby building metrics for classification quality.

Fig. 10

EP 3 422 262 A1

## Description

The present invention relates to machine learning and in particular to a method of monitoring the performance of a machine learning algorithm

Many applications of machine learning (ML) suffer from concept drift. Concept drift occurs when live samples to which the learned ML algorithm is being applied change so that the original training data is no longer representative of the space to which the ML algorithm is applied. A good example of an application that often suffers from concept drift is the use of machine learning models of malware behaviour for malware classification. A crucial requirement for building sustainable learning models is to train on a wide variety of malware samples. Unfortunately, malware evolves rapidly and it becomes thus hard - if not impossible - to generalize learning models to reflect future, previously-unseen behaviours. Consequently, most malware classifiers become unsustainable in the long run, becoming rapidly antiquated as malware continues to evolve.

Building sustainable classification models for classifying malware is hard. Malware is mercurial and modelling its behaviour is difficult. Codebases of commercial significance, such as Android, are frequently patched against vulnerabilities and malware attacking such systems evolves rapidly to exploit new attack surfaces. Consequently, models that are built through training on older malware often make poor and ambiguous decisions when faced with modem malware, due to concept drift. In order to build sustainable models for malware classification, it is important to identify when the model shows signs of ageing whereby it fails to recognize new malware.

Previous solutions aim to periodically retrain the model. However, if the model is retrained too frequently, there will be little novelty in the information obtained to enrich the classifier. On the other hand, a loose retraining frequency leads to periods of time where the model performance cannot be trusted. Regardless, the retraining process requires manual labelling of all the processed samples, which is constrained by available resources. Once the label is acquired, traditional metrics such as precision and recall are used to retrospectively indicate the model performance. However, these metrics do not assess the decision of the classifier. For example, hyperplane-based learning models (e.g., SVM) only check the side of the hyperplane where the object lies while ignoring its distance from the hyperplane. This is a crucial piece of evidence to assess non-stationary test objects that eventually lead to concept drift.

A well known approach to the qualitative assessment of decisions of a learning model is the probability of fit of test object in a candidate class. Previous work has relied on using fixed thresholds on probabilities to identify best matches. Standard algorithms compute the probability of a sample fitting into a class as a by-product of the classification process. However, since probabilities need to sum up to 1.0, it is likely that for a previously unseen test object which does not belong to any of the classes, the probability may be artificially skewed. Venn-Abers Predictors (VAP) [4] have recently been proposed to address such shortcomings. The model outputs two probabilities, one of which is calibrated. As it is not possible to know which one is calibrated, in [4], Deo et al. propose ad-hoc metrics to mitigate this issue; although promising, the approach is unfortunately still in its infancy and does not reliably identify drifting objects.

Techniques that look at objects statistically rather than probabilistically have been proposed. For example, Conformal Predictor [9] makes predictions with statistical evidence. However, this method is not tailored to be used in presence of concept drift.

It is an aim of the present invention to provide methods of automatically detecting concept drift.

According to the present invention, there is provided a computer-implemented method for monitoring the performance of a machine learning algorithm, the method comprising:

using the machine learning algorithm to assess a plurality of test objects and provide respective classification values and assessment values;
obtaining evaluation metrics for a plurality of the test objects, the evaluation metrics being statistical measures of the quality of the assessment of the machine learning algorithm; and
detecting concept drift from the evaluation metrics.

According to the present invention, there is also provided a computer program implementing the above described method.

According to the present invention, there is provided a system comprising:

an assessment module comprising a machine learning algorithm configured to assess a plurality of test objects and provide respective classification values and assessment values; and
a monitoring module comprising an evaluator configured to obtain evaluation metrics for a plurality of the test objects, the evaluation metrics being statistical measures of the quality of the assessment of the machine learning algorithm; and a detector configured to detect concept drift from the evaluation metrics.

The present invention can thus provide a framework to identify ageing classification models in vivo during deployment, much before the machine learning model's performance starts to degrade. This is a significant departure from conventional approaches that retrain ageing models retrospectively when poor performance is observed. Our approach uses a statistical comparison of samples seen during deployment with those built to train the model, thereby building metrics for prediction quality.

A statistical approach to decision assessment considers each decision in the context of previously made decisions. This is different to a probabilistic assessment where the metric is indicative of how likely a test object is to belong to a class. In contrast, statistical techniques answer the question: how likely is the test object to belong to a class compared to all of its other members? On two separate case studies on Android and Windows malware, we show how an embodiment of the invention can be used to identify concept drift, raising a red flag before the model consistently starts making poor decisions due to out-of-date training.

Statistical assessments can overcome the limitations of probabilistic approaches, by addressing two issues. Firstly, the assessment has to be agnostic to the algorithm that is used to build the learning model. This is non-trivial as different algorithms can have different underlying classification heuristics. Any metric has to abstract away from the algorithm and identify a universal criteria that treats the underlying algorithm as a black box. Secondly, auto-computation of thresholds to identify an ageing model from an abstract assessment criteria is difficult and requires a brute force search over these scores for the training objects.

The invention addresses both these issues by providing both meaningful and sufficiently abstract assessment metrics as well as an assessment criteria for interpreting the metrics in an automated fashion. The present invention provides a fully parametric statistical framework for assessing decisions made by the classifier to identify concept drift. By translating the decision assessment problem to a constraint optimization problem the present invention can be parametric with diverse operational goals. It can be bootstrapped with pre-specified parameters that dictate its sensitivity to varying levels of concept drift. For example, in applications of critical importance, an embodiment of the invention can be pre-configured to adopt a strict filtering policy for poor and unreliable classification decisions. While previous work has looked at decision assessment, to the best of our knowledge, this is the first work that looks at filtering strategies for poor decisions using decision assessment techniques. Thereby, embodiments of the invention can be deployed in existing systems, e.g. malware detection systems, with a view to identifying ageing models and ameliorate performance in face of concept drift.

To summarise, embodiments of the present invention can provide:

- an evaluation framework, referred to herein as conformal evaluator (CE), to assess the quality of machine learning tasks. Core of CE is the definition of a non-conformity measure derived by a given ML algorithm under evaluation (AUE). CE builds statistical metrics to quantify the AUE quality and statistically support goodness of fit of a data point into a class.
- assessments on top of CE's statistical metrics to evaluate the AUE design and understand statistical distribution of data to better capture AUE's generalization and class separations. The assessments facilitate the identification of suitable statistical thresholds to detect decays of ML performance in practical settings.
- a fully tunable classification system that can be tailored to be resilient against concept drift to varying degrees depending on user specifications. This versatility enables embodiments of the invention to be used in a wide variety of deployment environments where the costs for manual analysis are central to classification strategies.

In an embodiment of the invention CE's assessments enable identification of suitable statistical thresholds to detect decays of ML performances. In realistic settings, therefore, the embodiment of the invention can identify concept drift in binary and multi-class classification tasks.

The present invention can be used in a wide variety of applications, such as (but not limited to): monitoring production processes; detection and classification of malware and spam of all types; image, face and voice recognition; fraud detection; text classification; and recommendation systems. The present invention also works with machine learning algorithms that produce a prediction score for each sample, i.e., a number that measure the difference between an object and a set of objects. It can be, for example, either a probability, a distance to a group of objects or just a real number.

The present invention will be described further below with reference to exemplary embodiments and the accompanying drawings, in which:

Figures 1A to D show results obtained using a trained support vector machine;
Figures 2A and 2B show decision assessment and alpha assessment results of a Binary Classification Case Study;
Figures 3A to 3D show p-value and probability distributions for the binary classification case study;
Figure 4 shows results of alpha assessments in a multiclass classification case study;
Figures 5A to 5I show comparisons between p-value and probability metrics for the binary classification case study;
Figures 6 to 9 show further results of the multiclass classification case study;
Figure 10 shows a system embodying the present invention; and

Figure 11 depicts steps in a method according to the invention.

*Non-conformity Measure (NCM)*

Classification algorithms are normally based on a *scoring function* that given a test object *z\** outputs a *prediction score* $A_D(C, z^*)$, where *D* is the dataset of all training objects and *C* is a label from the set of all possible object labels *C*.
The scoring function can be used to measure the difference between a group of objects belonging to the same class (e.g., malware belonging to the same family) and a new object (i.e., a sample). In an embodiment, the *non-conformity measure* (NCM), which is used in the invention for statistical assessment of classification decisions, is computed directly from the scoring function of the algorithm. Thus, conformal evaluation is algorithm agnostic making it versatile and compatible with multiple ML algorithms; it can be applied on top of any classification or clustering algorithm that uses a score for prediction.
Some algorithms already have built-in quality measures (e.g., the distance of a sample from the hyperplane in SVM). However, these are algorithm specific and cannot be directly compared with other algorithms. On the other hand, embodiments of the present invention unify such quality measures through uniform treatment of non-conformity in an algorithm-agnostic manner.

*P-values as a Similarity Metric*

At the heart of conformal evaluation is the non-conformity measure - a real-valued function *AD*(*C\z, z*), which tells how different an object *z* is from a set *C*. Set *C* is a subset of the dataset of objects *D*. Due to the real-valued range of non-conformity measure, conformal evaluator can be immediately used with a variety of machine learning methods such as support-vector machines, neural networks, decision trees and Bayesian prediction and others that make use of real-valued numbers (e.g., a similarity function) to distinguish objects. Such flexibility enables embodiments of the present invention to assess a wide range of algorithms. Conformal evaluation computes a notion of similarity through p-values. For a set of objects *K,* the p-value pc for an object *z\** is the proportion of objects in class *K* that are at least as dissimilar to other objects in *C* ∈ *C* as the object *z\**. *K* represents either C or D depending on latter use. The calculations for the non-conformity measures for the test object and the set of objects in *K* are shown in equation 1 and equation 2 respectively. The computation of p-value for the test object is shown in equation 3.

$$\alpha_{z^*} = A_D(C, z^*) \tag{1}$$

$$\forall i \in K. \alpha_i = A_D(C \backslash z_i, z_i) \tag{2}$$

$$p_{z^*}^C = \frac{|\{j : \alpha_j \geq \alpha_{z^*}\}|}{|K|} \tag{3}$$

*P-values vs. Probabilities*

One might question the utility of p-value over probability of a test object belonging to a particular class. Probabilities are computed by most learning algorithms as qualitative feedback for a decision. SVM uses Platt's scaling to compute probability scores of an object belonging to a class while a random forest averages the decision of individual trees to reach a final prediction. However, there are shortcomings of using probabilities for decision assessment. Additionally, we also provide empirical evidence in favour of p-values as a building block for decision assessment.
P-values offer a significant advantage over probabilities when used for decision assessment. Let us assume that the test object *z\** has p-values of $p_{z^*}^1, p_{z^*}^2 \cdot\cdot p_{z^*}^k$ and probability of $r_{z^*}^1, r_{z^*}^2 \cdot\cdot r_{z^*}^k$ of belonging to classes $C_1, C_2 ... C_k$ (which is the set of all classes in *C*). For the case of probabilities, $\sum_i r_{z^*}^i$ must sum to 1.0. Now, let us consider a 2-class problem. If the *z\** does not belong to either of the classes, and the algorithm computes a low probability score $r_{z*}^1 \sim 0.0$, then $r_{z^*}^2$ would artificially tend to 1.0. In other words, if we use probabilities for decision assessment it is likely that we might reach an incorrect conclusion for previously unseen samples. P-values on the other hand are not constrained by such limitations. It is possible for both $p_{z^*}^1$ and $p_{z^*}^2$ to be low for the case of a previously unseen sample. Hence, p-values are better suited to the study of concept drift scenario where a sample may not belong to any of the available classes/clusters. Thereby, the framework provides a sound assessment of the decision.

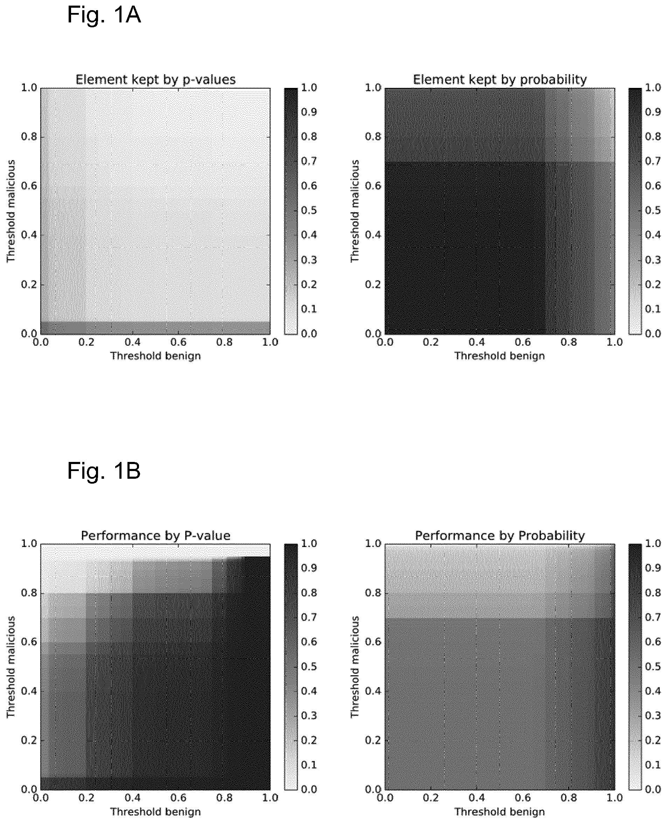

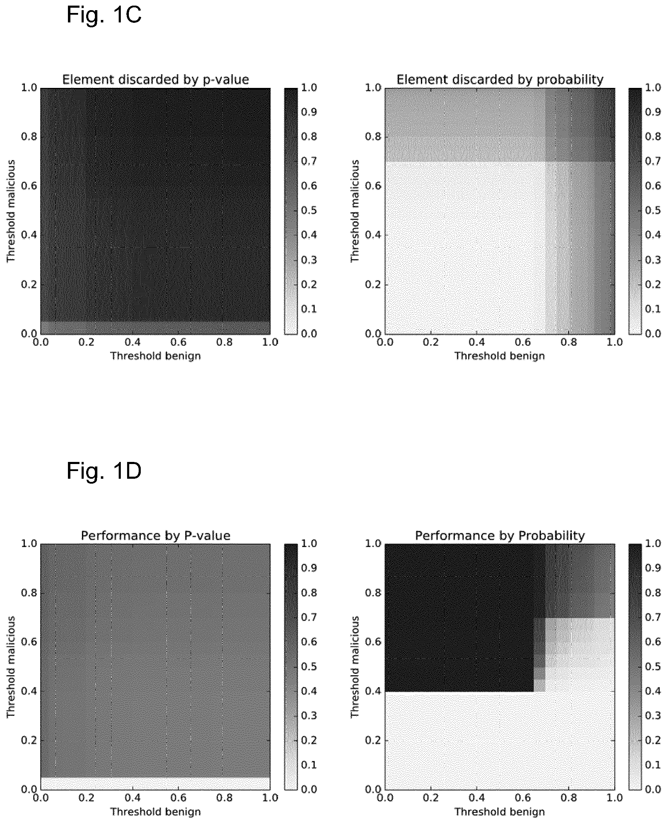

We further study this hypothesis by training a support vector machine (SVM) to classify Drebin dataset [2] and we test the model using samples from a drifted dataset (Marvin dataset [7]. Then, we apply a threshold to accept the decision of the classifier only if a certain level of certainty is achieved. Figures 1A to 1D show a performance comparison between p-value and probability for the element above and below the threshold used to accept the algorithm decision. The p-values are given by CE with SVM as non-conformity measure, the probabilities are given directly by the SVM. The figures show the average of F1-score for malicious and benign classes after the application of the threshold for the samples that fall above (Figure 1B) and below it (Figure 1D). Figure 1 also shows the ratio of elements kept (Figure 1A) and discarded (Figure 1C). Figure 1B shows that the use of p-values produces better performance as it discards more elements compared to probability (Figure 1A). Discarding a high number of samples is natural due to samples drifting and keeping such samples will degrade the performance as seen in Figure 1D and Figure 1C. The results presented are obtained by applying the threshold to the testing samples directly. We present case studies below which show how to derive the threshold used on the testing samples from the training dataset.

*Statistical Metrics for Decision Assessment*

This section introduces CE metrics used to assess the classification decisions. We discuss the metrics first, then the techniques for interpreting these metrics.

**Algorithm Credibility.** A first evaluation metric for assessing classification decision on a test object is *algorithm credibility.* It is defined as the p-value for the test object corresponding to the label chosen by the algorithm under analysis. As discussed, the p-value measures the fraction of objects within $K$, that are at least as different from the members of class $C \in C$ as the new object $z^*$. A high credibility value means that $z^*$ is very similar to the objects in the class chosen by the classifier. Although credibility is a useful measure of classification quality, it only tells a partial story. There may potentially be high p-values for multiple labels indicating multiple matching labels for the test object which the classification algorithm has ignored. On the other hand, a low credibility value is an indicator of either $z^*$ being very different from the objects in the class chosen by the classifier or the object being poorly identified. These two observations show that credibility alone is not sufficient for reliable decision assessment. Hence, the present invention uses algorithm confidence to gauge the non-performance of the classification algorithm.

**Algorithm Confidence.** A second evaluation metric for assessing classification decision on a test object is *algorithm confidence.* For a given choice (e.g., assigning $z$ to a class $c_i$), algorithm confidence tells how certain or how committed the evaluated algorithm is to the choice. Formally, it measures how much the new object $z^* \in c_i$ is distinguishable from other classes $c_j$ with $j \neq i$.

The algorithm confidence is defined as one minus the maximum p-value among all p-values except the *p-value* chosen by the algorithm

$$A_{Conf}(z^*) = 1 - \max(P(z^*) \backslash A_{Cred}(z^*)) \tag{4}$$

with, $P(z^*) = \{p_{z^*}^{c_i} : c_i \in D\}$

$P(z^*)$ is the set of p-values associated to the possible choices for the new object $z^*$. The highest value of confidence is reached when the algorithm credibility is the highest p-value. It may happen that the choice made by the algorithm is not the best one, reflecting also on the confidence being not optimal. Results below show that this provides valuable insights, especially when the methods under assessment make choices with low values of confidence and credibility. Low algorithm confidence indicates that the given object is similar to other classes as well. Depending on the algorithm credibility, this indication may imply that the decision algorithm is not able to uniquely identify the classes or, that the new object looks similar to two or more classes.

Algorithm confidence and algorithm credibility are not biased by the number of classes within a dataset as common measures such as precision and recall are. This means that conformal evaluator's findings are more robust to dataset changes.

The present invention uses two techniques to evaluate the quality of an algorithm employed on a given dataset: (i) Decision assessment - evaluates the robustness of the predictions made by the algorithm; and (ii) Alpha assessment - evaluates the quality of the non-conformity measure.

*Decision Assessment*

Conformal evaluator qualitatively assesses an algorithm's decision by assigning a class $C \in C$ as predicted by the algorithm to each new object $z^*$ and computing its algorithm credibility and confidence.

Hence, four possible scenarios unfold: (i) High algorithm confidence, high algorithm credibility - the best situation, the algorithm is able to correctly identify a sample towards one class and one class only. (*ii*) High algorithm confidence, low algorithm credibility - the algorithm is not able to correctly associate the sample to any of the classes present in the dataset. (*iii*) Low algorithm confidence, low algorithm credibility - the algorithm gives a label to the sample but it seems to be more similar to another label. (*iv*) Low algorithm confidence, high algorithm credibility - according to the algorithm, it seems that the sample is similar to two or more classes.

The measures are then grouped into two separate sets, correct or wrong, which represents values for correctly and wrongly classified objects respectively. Values are then averaged and their standard deviation is also computed, this is done for every class $c \in D$, to determine whether the algorithm works consistently for all classes or if there are difficult classes that the algorithm has trouble dealing with. This assessment computed during the design phase of the algorithm can be used to decide the cut-off threshold for a deployed scenario to separate the samples with enough statistical evidence of correctness.

Comparing the results obtained for correct and wrong choices produces interesting results. For correct choices it would be desirable to have high credibility and high confidence. Conversely, for wrong choices it would be desirable to have low credibility and high confidence. The divergence from these scenarios helps us understand whether the algorithm takes strong decisions, meaning that there is a strong statistical evidence to confirm its decisions, or, in contrast, if the decisions taken are easily modified with a minimal modification to the underlying data.

By looking at the outcome of decision assessment, it is possible to understand whether the choices made by an algorithm are supported with statistical evidence. Otherwise, it is possible to get an indication where to look for possible errors or improvements, i.e., which classes are troublesome, and whether further analysis is needed, e.g. by resorting to the alpha assessment.

*Alpha Assessment*

In addition to the decision assessment, which evaluates the output of a similarity-based classification/clustering algorithm, another important step in understanding the inner workings and subtleties of the algorithm includes analysing the data distribution of the algorithm under evaluation. Owing mainly to practical reasons, malware similarity-based algorithms are developed around a specific dataset. Hence there is often the possibility that the algorithm over-fits its predictions to the dataset. Over-fitting results in poor performance when the algorithm analyses new or unknown datasets. Despite employing techniques to avoid over-fitting, the best way to answer this question is to try the algorithm against as many datasets as possible. Conformal evaluator can help solve this problem, when no more than one dataset is accessible.

The *alpha assessment* analysis takes into account how appropriate is the similarity-based algorithm when applied to a dataset. It can detect if the final algorithm results still suffer from over-fitting issues despite the efforts of minimizing it using common and well known techniques (e.g., cross validation).

Furthermore, the assessment enables us to get insights on classes or groups of them (e.g., malware families), highlighting how the similarity-based method works against them, and helping the researcher to gather new intelligence regarding the peculiarities of each class, hence to possibly narrow down the places to look into in order to improve the algorithm.

First, for each object $z_j \in D$, where $c_j$ is $z_j$ true class, its p-values against every possible decision in the dataset are computed. We then plot the boxplot, containing the p-values for each decision. By aligning these boxplots and grouping them by class/cluster, we can see how much an element of class/cluster j resembles that of another one allowing for reasoning about the similarity-based algorithm itself.

In the next section we present case studies where we statistically evaluate the quality behind performances of algorithms within the conformal evaluator framework.

*Concept Drift*

In this section, the principle of the present invention's concept drift detection and object filtering mechanism is described with reference to an embodiment for monitoring the performance of a malware analysis algorithm. It must be stressed here that we look at concept drift from the perspective of a malware analysis team. Consequently, the malware analysis team would have a high standard of when it would want to abandon an ageing classification model. Therefore, we make the concept drift detection in this embodiment parametric in two dimensions: the desired performance level ($\omega$) and the proportion of samples in an epoch the malware analysis team is willing to manually investigate ($\delta$). We now present a framework which takes in $\omega$ and $\delta$ as the first degrees of freedom and tries to optimize by either one or the other while being constrained by first degrees of freedom.

We now define the function $f : B \times M \rightarrow \Omega \times \Delta$ that maps a pair of thresholds on the p-values of objects in the benign and malicious class and outputs the performance achieved and the number of decisions accepted.. Here B, M, $\Omega$ and $\Delta$ are the domains of the possible thresholds on benign samples, malicious samples, desired performance and classification decisions accepted. During training of our classifier, we iterate over all values of the benign threshold $t'_b$ and the malicious threshold $t'_m$, at a pre-specified level of granularity, in the domain of **B** and **M**, respectively. Let's assume that we get the following output from $f$:$f(t'_b,t'_m) = (\omega',\delta)$

In order to detect concept drift during deployment with a pre-specified threshold of either $\omega$ or $\delta$, it is necessary to define an inverse to $f$ which we call $f^{-1}: \Lambda \rightarrow \mathbb{B} \times \mathbb{M}$ where $\Lambda = \Omega \cup \Delta$. When supplied with either $\omega$ or $\delta$, $f$ -1 would give us two thresholds $t_b$ and $t_m$ which would help the embodiment decide when to accept the classifier's decision and when to ignore it. Notice that with a conjoined domain $\Lambda$, which only accepts either $\omega$ or $\delta$, it is not trivial to reconstruct the values of $t_b$ and $t_m$. For every value of $\omega$, there could be multiple values for $\delta$. Therefore, we adopt a simple heuristic to compute $t_b$ and $t_m$ whereby we maximize the second degree of freedom give the first. In other words, given an $\omega$, we find $t_b$ and $t_m$ for every possible value of $\delta$ and pick the $t_b$ and $t_m$ that maximizes $\delta$. The formulation is exactly the same when $\delta$ is used as an input. The formal equations for the inverse functions are shown below:

$$\Gamma = \{x : x \in \forall t'_b \forall t'_m . f(t'_b, t'_m))\} \tag{5}$$

$$f^{-1}(\omega) = \{(t_b, t_m) : \delta \in f(t_b, t_m) = \max(\forall \delta' \in \Gamma)\} \tag{6}$$

$$f^{-1}(\delta) = \{(t_b, t_m) : \omega \in f(t_b, t_m) = \max(\forall \omega' \in \Gamma)\} \tag{7}$$

**Distribution comparison.** The algorithms used as inner NCM in CE usually have a pre-defined quality metric used for its own decision making process. Hence, we also compare the ability of detecting concept drift of the algorithm's internal metric with CE metrics. The thresholds are extracted from the true positive samples, because we expect the misclassified samples to have a lower value of the quality metric. It is more appropriate to select a higher threshold to discard incorrect decisions. We compare our metrics with probability metrics derived from two different algorithms for our case studies. In the first case study, we compare our metrics with SVM probabilities derived from Platt's scaling; instead, the second case study uses the probabilities extracted from a random forest model. This comparison shows the general unsuitability of the probability metric to detect concept drift. For example, the threshold obtained from the first Quartile of the true positive p-value distribution is compared with the threshold obtained from the first Quartile of the true positive probability distribution, so on and so forth.

CE can also provide quality evaluation that allows switching the underlying ML-based process to a more computationally intensive one on classes with poor confidence [3]. Our work details the CE metrics used by Dash et al. [3] and extends it to identify concept drift.

EVALUATION

Two case studies demonstrate the effectiveness of an embodiment of the present invention: a binary classification to detect malicious Android apps [2], and a multi-class classification to classify malicious Windows binaries in their respective family [1]. The case studies were chosen to be representative of common supervised learning settings (i.e., binary and multi-class classification), easy to reproduce, and of high quality.

**Binary Classification Case Study.** In [2], Arp et al. present a learning-based technique to detect malicious Android apps. The approach, dubbed Drebin, relies on statically extracting features, such as permissions, Intents, APIs, strings and IP addresses, from Android applications to fuel a linear SVM. Hold-out validation results (66-33% split in training-testing averaged over ten runs) reported TPR of 94% at 1% FPR. The Drebin dataset was collected from 2010 to 2012 and the authors released the feature set to foster research in the field.

**Multiclass Classification Case Study.** In [1], Ahmadi et al. present a learning-based technique to classify Windows malware in corresponding family of threats. The approach builds features out of machine instructions' opcodes of Windows binaries as provided by Microsoft and released through the Microsoft Malware Classification Challenge competition on Kaggle [5], a well-known platform that hosts a wide range of machine learning-related challenges, including security ones. Ahmadi et al. rely on eXtreme Gradient Boosting (XGBoost) or classification. It is based on gradient boosting and, like any other boosting technique, it combines different weak prediction models to create a stronger one. In particular, the authors use XGBoost with decision trees.

Table 2 provides a breakdown of the Microsoft Windows Malware Classification Challenge dataset. To properly evaluate a drifting scenario in such settings, we omit the family Tracur from the training dataset, as further elaborated in detail below. In this setting, a reasonable conformity measure that captures the likelihood of a test object o to belong to a given family C is represented by the probability p that o belongs to C, as provided by decision trees. A derived non-conformity measure we initialize conformal evaluator with is thus -p, as conformal evaluator captures dissimilarities. Please note we do not interpret -p as a probability anymore (probability ranges from 0 to 1), but rather as a (non-conformity) score conformal evaluator builds p-values from (see Section 2).

Even models that perform well in closed world settings (e.g., k-fold cross validation), eventually decay in the presence of non-stationary data (concept drift). Embodiments of the present invention can identify when this happens in operational settings, and provide indicators that allow to establish whether one should trust or not a classifier decision. In absence of retraining, which requires samples relabeling, the ideal net effect would then translate to having high performances on non-drifting objects (i.e., that fit well into the trained model), and low results on drifting ones.

*Binary Classification Case Study*

This section assesses the quality of the predictions of Drebin (unless otherwise stated, we refer to Drebin as both the learning algorithm and the dataset outlined in [2]), the learning algorithm presented in [2]. We reimplemented Drebin and achieved results in line with those reported by Arp et al. in absence of concept drift (0.95 precision and 0.92 recall, and 0.99 precision and 0.99 recall for malicious and benign classes, respectively, hold out validation with 66-33 training-testing Drebin dataset split averaged on ten runs).

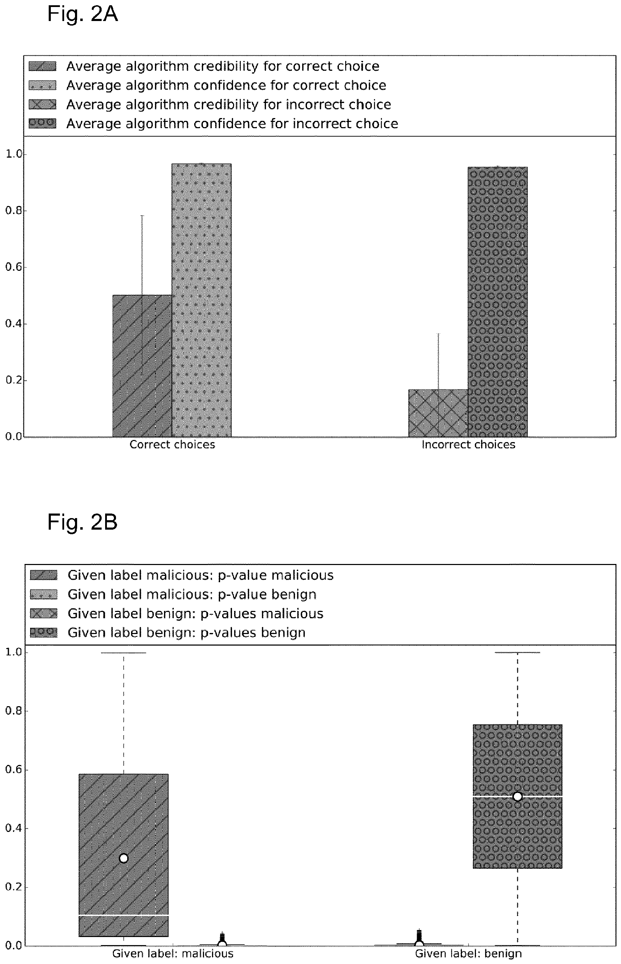

Figure 2A shows how CE's decision assessment supports such results. In particular, the average algorithm credibility and confidence for the correct choices are 0.5 and 0.9, respectively. This reflects a high prediction quality: correctly classified objects are very different (from a statistical perspective) to the other class (and an average p-value of 0.5 as algorithm credibility is expected due to mathematical properties of the conformal evaluator). A similar reasoning holds for incorrect predictions, which are affected by a poor statistical support (average algorithm credibility of 0.2).

Figure 2B shows CE's alpha assessment of Drebin. We plot this assessment as a boxplot to show details of the pvalue distribution. The plot shows that the p-value distribution for the wrong predictions (i.e., second and third column) is concentrated in the lower part of the scale (less than 0.1), with few outliers; this means that, on average, the p-value of the wrong class is much lower than the p-value of the correct predictions. Benign samples (third and fourth columns) seems more stable to data variation as the p-values for benign and malicious classes are well separated. Conversely, the p-value distribution of malicious samples (first and second columns) is skewed towards the bottom of the plot; this implies that the decision boundary is less marked, which may affect the classifier results in the presence of concept drift. A direct evaluation of the confusion matrix and associated metrics does not provide the ability to see decision boundaries nor predictions (statistical) quality.

TABLE 1: Binary classification case study datasets [2]

| DREBIN DATASET | | MARVIN DATASET | |
|---|---|---|---|
| Malware | Samples | Malware | Samples |
| Benign | 123,435 | Benign | 9,592 |
| Malware | 5,560 | Malware | 9,179 |

TABLE 2: Multiclass classification case study datasets [2].
MICROSOFT MALWARE CLASSIFICATION CHALLENGE DATASET

| Malware | Samples | Malware | Samples |
|---|---|---|---|
| Ramnit | 1 541 | Obfuscator.ACY | 1 228 |
| Lollipop | 2 478 | Gatak | 1 013 |
| Kelihos˙ver3 | 2 942 | Kelihos˙ver1 | 398 |
| Vundo | 4 75 | Tracur | 751 |

*Detecting Concept Drift*

This section presents a number of experiments to show how an embodiment of the present invention identifies concept drift and correctly discards objects the classifier instantiated on top of CE as non-conformity measure would predict erroneously.

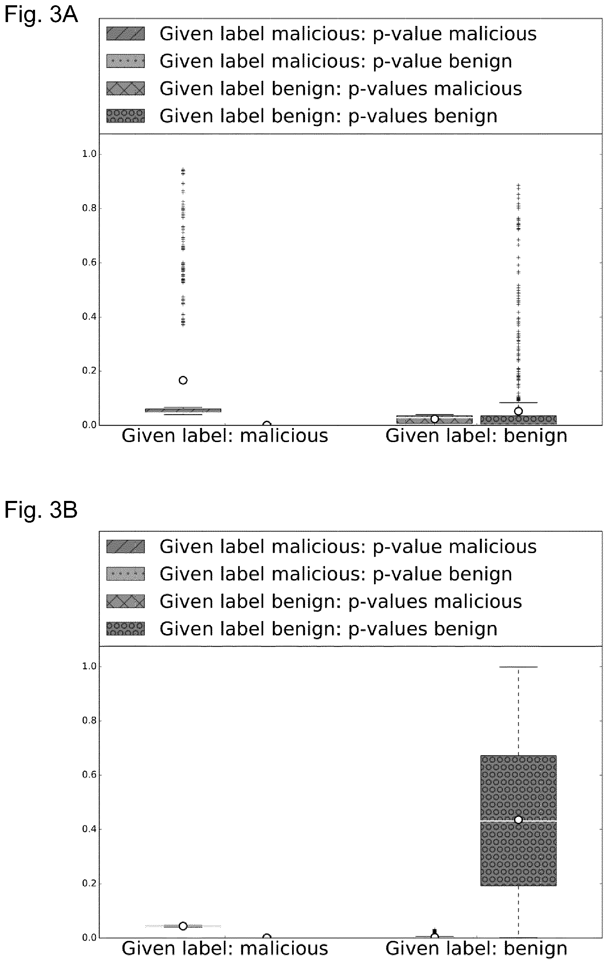

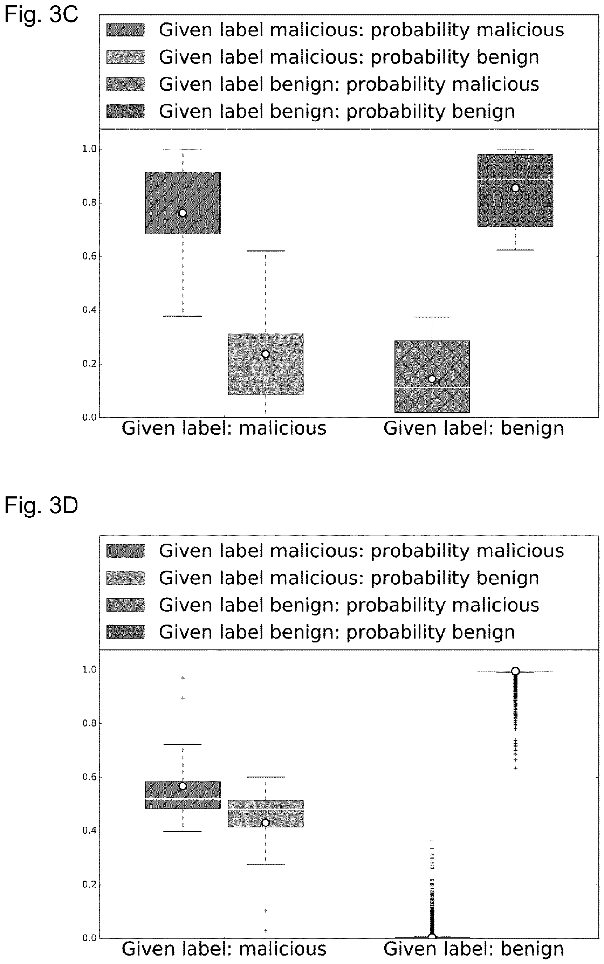

We first show how the performance of the learning model introduced in [2] decays in the presence of concept drift. To this end, we train such model against the Drebin dataset (as provided in [2]) and we tested it against 9,000 randomly selected malicious and benign Android apps (50/50 split) drawn from the Marvin dataset [7]. Results are shown in Figure 3 which shows p-value and probability distributions for true malicious and benign samples when the model is trained on Drebin dataset and tested on Marvin. Graph (a) is p-value distribution for true malicious samples. Graph (b) is p-value distribution of true benign samples. Graph (c) is probability distribution of true malicious samples. Graph (d) is probability distribution of true benign samples. The confusion matrix shown in Table 3a clearly shows how the model is affected by concept drift as it reports low precision and recall for the True class representing malicious objects. This phenomenon is further outlined in Figure 3A, which shows how the p-value distribution of malicious objects is pushed towards low values (poor prediction quality).

TABLE 3a confusion matrix when the model is trained on Drebin and tested on Marvin

| Sample | Assigned label | | |
|---|---|---|---|
| | Benign | Malicious | **Recall** |
| Benign | 4498 | 2 | 1 |
| Malicious | 2890 | 1610 | 0.36 |
| **Precision** | 0.61 | 1 | |

TABLE 3b confusion matrix when the model is trained on Drebin and tested on Marvin with p-value-driven threshold filtering

| Sample | Assigned label | | |
|---|---|---|---|
| | Benign | Malicious | **Recall** |
| Benign | 4257 | 2 | 1 |
| Malicious | 504 | 1610 | 0.76 |
| **Precision** | 0.89 | 1 | |

TABLE 3c retraining simulation with training samples of Drebin + the filter out element of Marvin of Table 3b (2386 malicious samples and 241 benign) and testing samples coming from another batch of Marvin samples (4500 malicious and 4500 benign samples)

| Sample | Assigned label | | |
|---|---|---|---|
| | Benign | Malicious | **Recall** |
| Benign | 4413 | 87 | 0.98 |
| Malicious | 255 | 4245 | 0.94 |
| **Precision** | 0.96 | 0.98 | |

Table 3b shows how enforcing cut-off quality thresholds affect - by improving - the performance of the same learning algorithm. For this experiment, we divided the Drebin dataset in training and calibration sets with a 90-10 split over 10 rounds. This ensures that each object in the dataset has a p-value. We then used an embodiment of the present invention to identify suitable quality thresholds with the aim to maximize the F1-score as derived by the calibration dataset, subject to a minimum F1-score of 0.99 and a minimum percentage of kept element of 0.76. It is worth noting that such thresholds are derived from the calibration dataset but are enforced to detect concept drift on a testing dataset. Results show how discarding testing objects with p-values below the cut-off thresholds improves precision and recall for the True class (malicious objects), from 0.61 to 0.89 and from 0.36 to 0.76, respectively.

The previous paragraph shows the flexibility of the parametric framework on an arbitrary yet meaningful example, where statistical cut-off thresholds are identified based on an objective function to optimize, subject to specific constraints; such goals are however driven by business requirements (e.g., TPR vs FPR) and resource availability (e.g., malware analysts available vs number of likely drifting samples - either benign or malicious - for which we should not trust a classifier decision) and providing numerical example might be challenging. To better outline the suitability of CE's statistical metrics (p-values) in detecting concept drift, we provide a full comparison between p-values and probabilities as produced by Platt's scaling applied to SVM. A similar argument (with probabilities derived from decision trees) for multiclass classification tasks is summarised below.

**Distributions Comparison.** In the following, we compare the distributions of p-values, as derived by CE, and probabilities, as derived by Platt's scaling for SVM, in the context of [2] under the presence of concept drift (i.e., training on Drebin, testing on Marvin as outlined previously). The goal of this comparison is to understand what metric is better-suited to identify concept drift.

Figure 3A shows the alpha assessment of the classifications shown in Table 3a. The figure shows the distribution of p-values when the true label of the samples is malicious. Correct predictions (first and second columns), reports p-values (first column) that are slightly higher than those corresponding to incorrect ones (second column), with a marginal yet well-marked separation as compared against the values they have for the incorrect class (third and fourth columns). Thus, when wrong predictions refer to the benign class, the p-values are low and show a poor fit to both classes. Regardless of the classifier outcome, the p-value for each sample is very low, a likely indication of concept drift.

Figure 3B depicts the distribution of p-values when true label of the samples is benign. Wrong predictions (first and second columns) report p-values representing benign (second column) and malicious (first column) classes to be low. Conversely, correct predictions (third and fourth columns) represent correct decisions (fourth column) and have high p-values, much higher compared to the p-values of the incorrect class (third column). This is unsurprising as benign samples have data distributions that are stationary with respect to malicious ones.

A similar reasoning can be followed for Figures 3C and 3D. Contrary to the distribution of p-values, probabilities are constrained to sum up to 1.0 across all the classes; what we observe is that probabilities tend to be skewed towards high values even when predictions are wrong. Intuitively speaking, one would expect to have poor quality on all the classes of predictions in the presence of drifting scenario: while probabilities tend to be skewed, CE's statistical metrics (p-values) seem better suited at this task.

So far, we have seen how an embodiment of the invention produces statistical thresholds to detect concept drift driven by predefined goals under specific constraints. In addition, the analysis of p-value and probability distributions highlighted how the former seem to be better-suited than probabilities to identify concept drift. In the following, we show how CE's statistical metrics provide thresholds that always outperform probabilities in detecting concept drift.

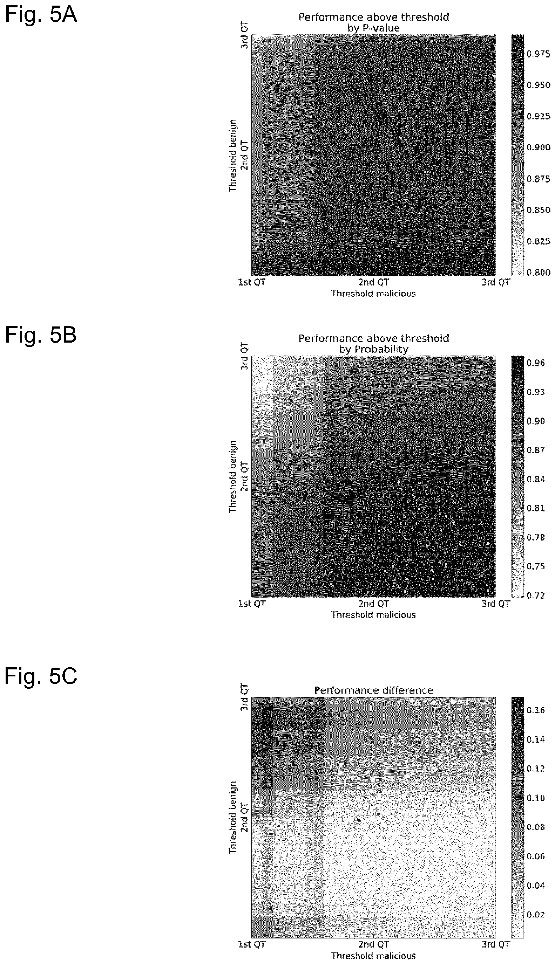

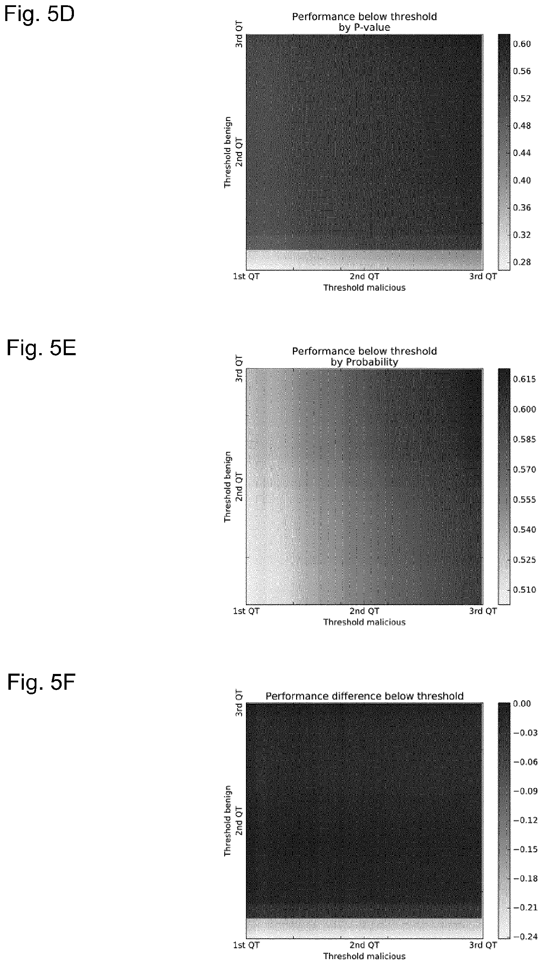

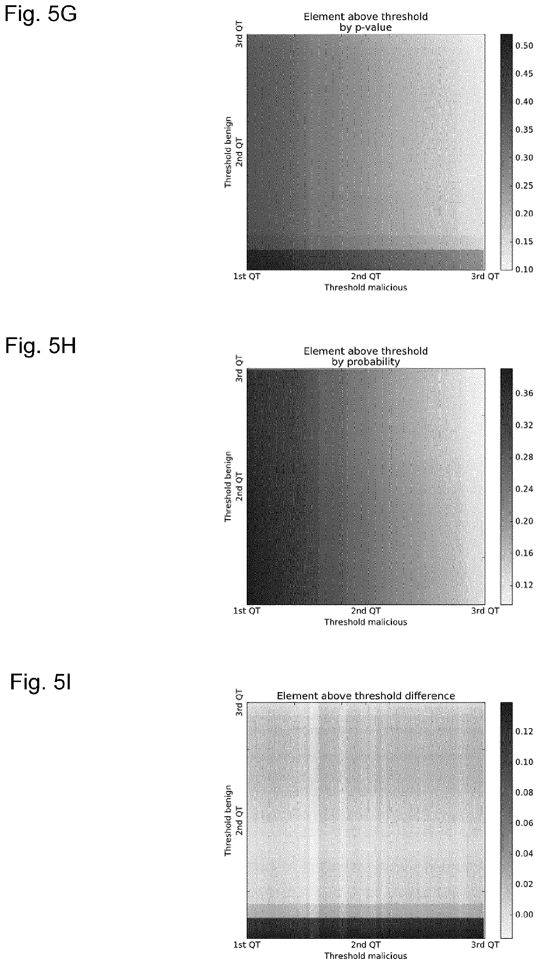

Figures 5A to 5J provide a thorough comparison between p-value probability metrics. Across all the threshold range we can see that the p-value based thresholding is providing better performance than the probability one, discarding the samples that would have been incorrectly classified if kept. The individual figures show:

- 5A Performance of p-value drive threshold for element above the threshold;
- 5B Performance of probability driven threshold for element above the threshold;
- 5C Performance difference between p-value and probability for element above the threshold;
- 5D Performance of p-value driven threshold for element below the threshold;
- 5E Performance of probability driven threshold element below the threshold;
- 5F Performance difference between p-value and probability for element below the threshold;
- 5G Number of element above the p-value threshold;
- 5H Number of element above the probability threshold;
- 5I Difference between the number of element above the threshold between p-value and probability.

For simplicity, here, we focus the attention on the 1 st and 3rd Quartile, the median and the average of the distribution of p-values and probabilities as potential cut-off thresholds, as shown in Table 4 which shows examples of thresholds. From the results we can see that increasing the threshold will lead to keep only the sample where the algorithm is sure about. The number of discarded samples is very subjective to the severity of the shift in the dataset, together with the performance of those sample it is clear the advantage of the p-value metric compared to the probability one.

TABLE 4 - Examples of thresholds

|  | TPR of kept elements | | FPR of kept elements | |
| --- | --- | --- | --- | --- |
|  | p-value | probability | p-value | probability |
| 1st Quartile | 0.9045 | 0.6654 | 0.0007 | 0 |
| Median | 0.8737 | 0.8061 | 0 | 0 |
| Mean | 0.8737 | 0.4352 | 0 | 0 |
| 3rd Quartile | 0.8723 | 0.6327 | 0 | 0 |

(continued)

| | TPR of discarded elements | | FPR of discarded elements | |
|---|---|---|---|---|
| | p-value | probability | p-value | probability |
| 1st Quartile | 0 | 0.3176 | 0 | 0.0013 |
| Median | 0.308 | 0.33 | 0.0008 | 0.0008 |
| Mean | 0.308 | 0.3433 | 0.0008 | 0.0018 |
| 3rd Quartile | 0.3411 | 0.3548 | 0.0005 | 0.0005 |
| | MALICIOUS kept elements | | BENIGN kept elements | |
| | p-value | probability | p-value | probability |
| 1st Quartile | 0.3956 | 0.1156 | 0.648 | 0.6673 |
| Median | 0.088 | 0.0584 | 0.4136 | 0.4304 |
| Mean | 0.088 | 0.1578 | 0.4136 | 0.7513 |
| 3rd Quartile | 0.0313 | 0.0109 | 0.1573 | 0.1629 |

Intuitively speaking, a successful technique not only would achieve high performances on correct predictions, but it would also report poor performances on drifting objects. This is evident in Table 4, where a cut-off threshold at the 1st Quartile reports for p-values a high performance (0.9045 TPR and 0.0007 FPR) for the objects that fit the trained model (0.9045 TPR at 0.0007 FPR), and a poor performance for those drifting away (TPR 0 and 0 FPR); this means that at this threshold, CE's statistical metrics discard only sample that would have been classified incorrectly. Conversely, probabilities tend to be skewed also when predictions are wrong, affecting the ability of relying on such metrics to correctly identify concept drift. Table 4 shows 0.6654 TPR and 0 FPR for objects whose quality fall above the 1st Quartile of the probability distribution, and 0.3176 TPR and 0.0013 FPR for those who fall below; this means probabilities tend to discard samples that would have been classified correctly.

As we move up towards more conservative thresholds, CE's statistical metrics start discarding objects that would have been classified correctly. This is unsurprising as we are defining a threshold that is more selective on the desired quality. Regardless, at each point p-values still outperform probabilities (higher TPR and FPR of objects with a quality higher than the cut-off, and lower ones for those below the threshold).

These results further show how relying on detecting concept drift is a more challenging problem that cannot be easily addressed by relying on a 50-50 threshold.

Note that the number of discarded objects on the testing dataset is a function of the number of drifting objects. If the entire dataset drifts, we would expect to discard all the samples that do not fit in the trained model.

**Adapting to Concept Drift.** Once drifting objects are identified, the next step would require data relabeling and model retraining. Table 3c shows the results of these steps, which take precision for benign samples to 0.89 and recall for malicious ones to 0.76. We would like to remark that this work focuses on the construction of statistical metrics to identify concept drift as outlined so far. While relabeling is out of scope for this work, it is clear that an approach that identifies only drifting objects is well-suited to address such challenge in the pipeline as resources can be entirely focused on analyzing samples that do not fit in the trained model.

*Multiclass Classification Case Study*

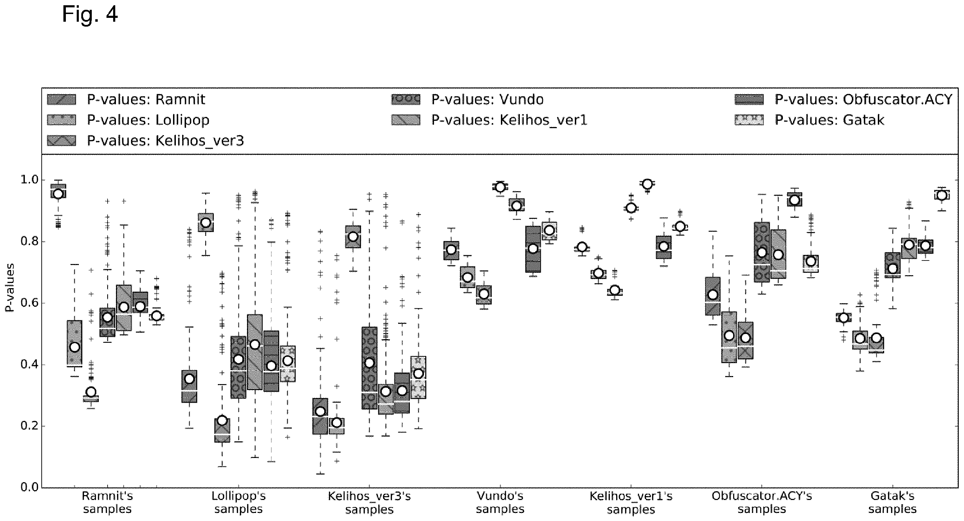

In this section we evaluate the algorithm proposed by Ahmadi et al. [1] as a solution to Kaggle's Microsoft Malware Classification Challenge; the underlying reasoning is similar to the one outlined in the previous section. Here, we only reports insightful information and take always. In this evaluation, we train the classifier with seven out of eight available malware families; Trucur, the excluded family, represents our drifting testing dataset. Some results are shown in Figure 4, specifically alpha assessment for the Microsoft classification challenge showing the quality of the decision taken by the algorithm. Although, perfect results are observed on the confusion matrix (Table 5), the quality of those results vary a lot across different families.

Table 5 reports a perfect confusion matrix; in this case, the decision assessment gives us no additional information because we cannot analyze the distribution of p-values of incorrect choices. From a quality perspective, as by the alpha assessment of Figure 4, two families, Vundo and Ramnit, have significant differences. The Ramnit family has p-values that are much higher than those of the interfering families. However, for Vundo the p-values of interfering families are closer to the correct ones. These details can be only be observed by the alpha assessment, suggesting that the identification of the Ramnit samples would be more robust when the data distribution changes.

Table 5: Multiclass Classification Case Study Confusion matrix for the Microsoft Challenge - 5 cross fold validation technique used to compute the results.

| | Assigned label | | | | | | | |
|---|---|---|---|---|---|---|---|---|
| Sample | Ramn it | Lolli pop | Kelihos' ver3 | Vundo | Kelihos' ver1 | Obfuscator. ACY | Gatak | **Recall** |
| Ramnit | 1541 | 0 | 0 | 0 | 0 | 0 | 0 | 1 |
| Lollipop | 0 | 2478 | 0 | 0 | 0 | 0 | 0 | 1 |
| Kelihos'ver3 | 0 | 0 | 2942 | 0 | 0 | 0 | 0 | 1 |
| Vundo | 0 | 0 | 0 | 475 | 0 | 0 | 0 | 1 |
| Kelihos'ver1 | 0 | 0 | 0 | 0 | 398 | 0 | 0 | 1 |
| Obfuscator.ACY | 0 | 0 | 0 | 0 | 0 | 1228 | 0 | 1 |
| Gatak | 0 | 0 | 0 | 0 | 0 | 0 | 1013 | 1 |
| **Precision** | 1 | 1 | 1 | 1 | 1 | 1 | 1 | |

**Family Discovery.** In the following, we show how CE's statistical metrics identify concept drift in the form of family discovery.

The testing samples coming from Tracur are classified as follow: 5 as Lollipop, 6 as Kelihos ver3, 358 as Vundo and 140 as Kelihos ver1. Looking at the distribution of probabilities and p-values it is easy to relate to the case of binary classification, i.e., for each family there is only one class with high p-values corresponding to the class of the true label. For the testing objects of Tracur, we observe that the p-values for all the classes are close to 0. This is a clear pattern that shows that the samples are coming from an unknown distribution.

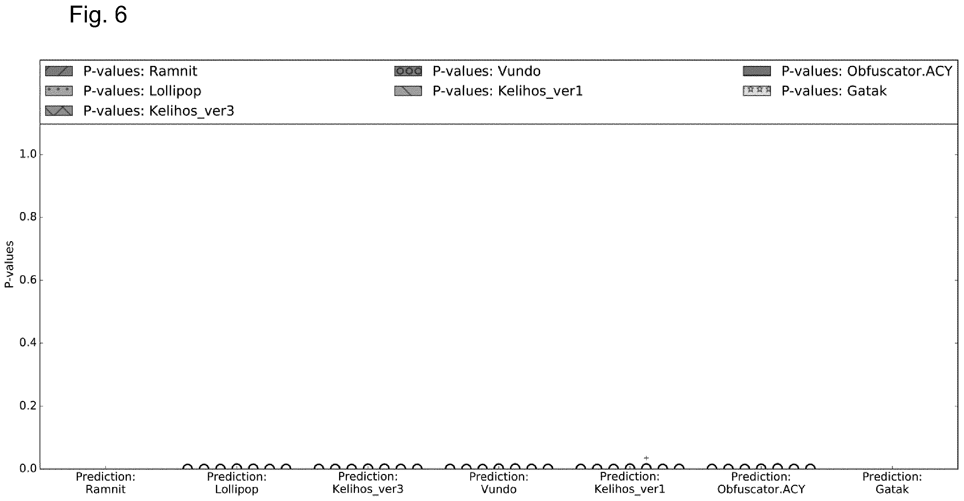

In a slow changing scenario, we will observe an initial concept drift (as shown in the binary classification case study in), characterized with a slow decrease of the p-values for all the classes, which ends up in a situation where we have p-values very close to 0 as observed here. These results clearly show that also in multiclass classification settings, CE provides metrics that are better-suited to identify concept drift than probabilities. The comparison of p-values against probabilities are reported in Figures 6, 7, 8 and 9 and follow a reasoning similar to the one outlined in the binary classification case study.

Specifically these figures show:

- Figure 6: P-value distribution for samples of Tracur family omitted from the training dataset; as expected, the values are all close to zero.

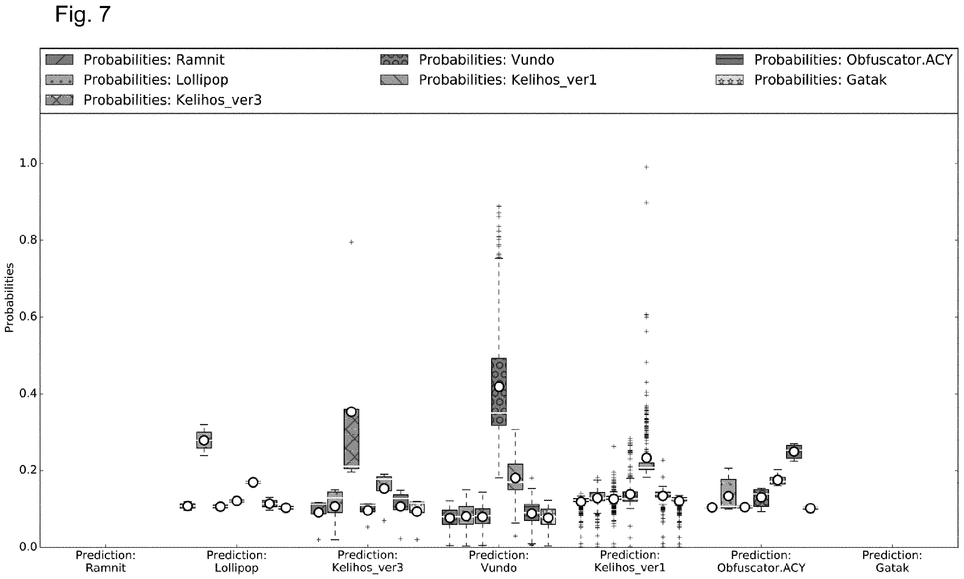

- Figure 7: probability distribution for samples of Tracur family omitted from the training dataset. Probabilities are higher than zero and not equally distributed across all the families, making the classification difficult. It is worth noting some probabilities are skewed towards large values (i.e. greater than 0.5) further hindering a correct classification result.

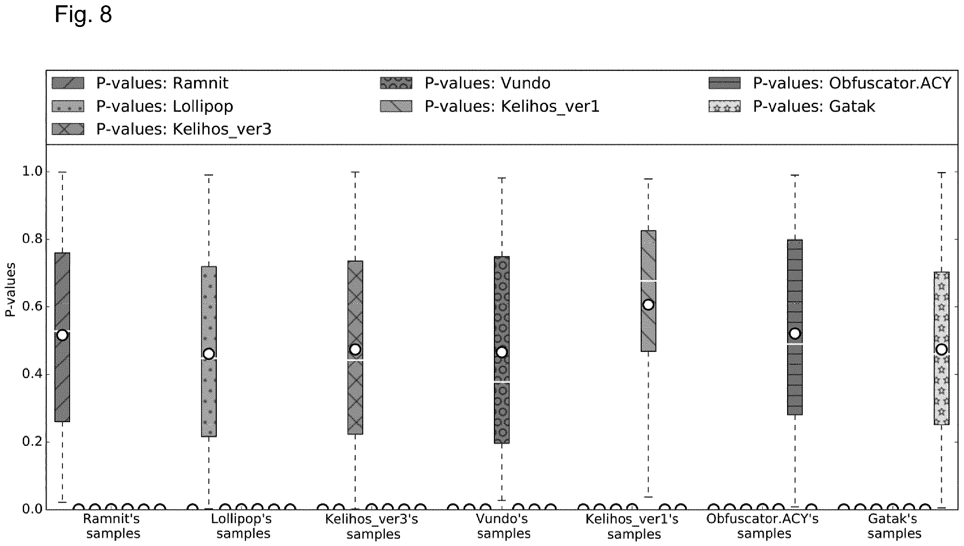

- Figure 8: a new family is discovered by relying on the p-value distribution for known malware families. The figure shows the amount of conformity each sample has with its own family; for each sample, there is only one family with high p-value.

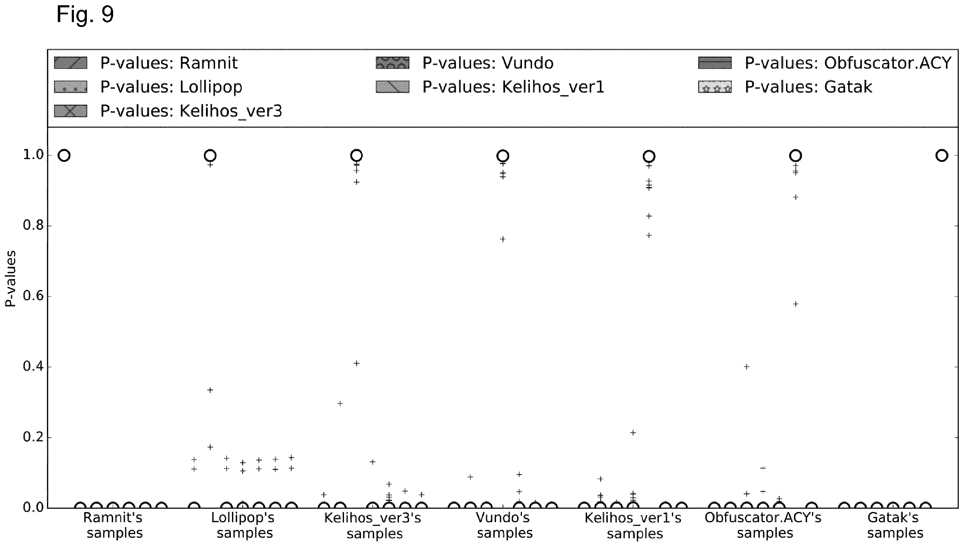

- Figure 9: probability distribution for samples of families included in the training dataset. High probabilities support the algorithm classification choice.

The security community has grappled with the challenge of concept drift for some time now. The problem commonly manifests itself in all malware detection/classification algorithm tasks and models perform poorly as they become dated. Literature [6, 8, 10] often proposes retraining the model periodically to get around this. However, retraining periodicity is loosely defined and is an expensive process, this leads to suboptimal results. Consequently, there are periods of time where the model performance cannot be trusted. The problem is further exacerbated as concept drift is not noticed without manual intervention. On the other hand, if the model is retrained too frequently, there will be little novelty in information obtained through retraining to enrich the model. Regardless of the periodicity, the retraining process requires manual labelling of all the processed samples. However, an embodiment of the invention can selectively identify the drifted samples with statistical significance, thus restricting the labelling process to the samples that add meaningful information to the subsequently generated model.

**Adversarial ML and Model Fortification.** Our work aims to detect concept drift as it occurs in an existing model. Concept drift can occur due to various reasons. Common causes being malware polymorphism or evasion but adversarial data manipulation (adversarial drift) can also be a reason. Approaches have been proposed to fortify models against drift [6, 8, 10], however such solutions deal with specific domains and do not provide a generalized solution. The present invention is agnostic to the machine learning algorithm under consideration. This allows the algorithm to be selected freely for its strength while still detecting concept drift. Therefore, if the algorithm is more resilient to concept drift, drift will be detected later on in time. If it is less resilient, drift will be detected sooner.

**Comparison with Probability.** Probabilities have been known to work well in some scenarios but as demonstrated above they are not as effective as compared to p-values which are more versatile, especially in the presence of concept drift. When probabilities are reported to be low it is difficult to understand if the sample does not belong to any class or if the sample is actually just difficult to classify while still belonging to one of the known classes. In other words, the p-value metric offers a natural null option when the p-values calculated for all the classes are low. Instead, as shown in the case of SVM, the probability metric is bounded to one of the options in the model. It does not matter if the probabilities are well calibrated or not, the limitation is inherent to the metric. Moreover, the p-value metric provided by our framework, can be calculated from algorithms that do not provide probabilities, e.g., custom algorithms, thus extending the range of algorithms that can benefit from a statistical evaluation.

**Performance.** Calculation of p-values is a computationally intensive process - for each sample z in a class c $\in$ C, the calculation of a p-value requires computation of a non-conformity measure for every element in the dataset. This can further be exacerbated by non-conformity measures that rely on distances that are complex to compute. The computational complexity in relation to the number of the times that the non-conformity measure needs to be computed is $O(C \cdot N^2)$, where N represents the total number of samples and C represents the number of classes. Calculations can be sped up by computing a whole set of non-conformity scores in one single algorithm run. For example, SVM used in Drebin [2] can directly supply the total non-conformity scores for the calculation of one p-value in only one run of the algorithm, thus reducing the complexity to $O(C \cdot N)$. Further optimizations can be made for algorithms that treat each class separately; in such a scenario we can run the algorithm just for the class under analysis.

Finally, if there are enough samples in the dataset the complexity drops to $O(1)$ making the calculation of p-values computationally affordable.

Accordingly the present invention provides a fully tunable tool for statistically assessing the performance of a classifier and filtering out unreliable classification decisions. CE's statistical confidence provides evidence for better understanding model generalization and class separation.

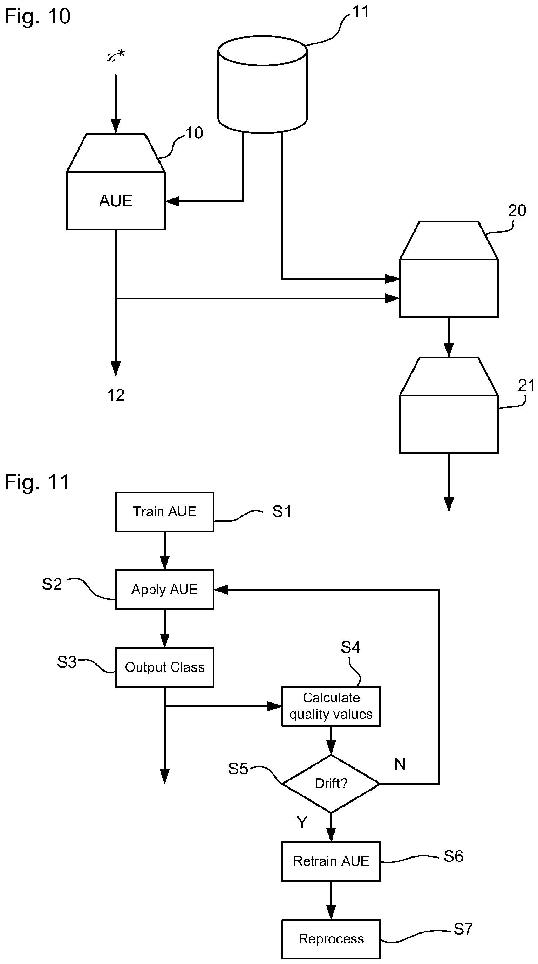

Figure 10 depicts a system according to an embodiment of the invention and Figure 11 depicts the method it performs.

The algorithm under evaluation 10 is trained S1 using training database 11. Once trained and operational it is supplied with test object z* which it classifies S2, outputting S4 a classification value 12 (this may also be referred to as an output value). Classification value 12 may be a binary value (e.g. malware or not malware), a multivalued indication (e.g. indicating membership of a class) and/or is a variable indicating a degree of similarity to one or more classes. In addition, the algorithm under evaluation outputs an assessment value that indicates the degree of similarity of the test object to the class represented by the classification value. The assessment value may also be described as a similarity score.

An evaluation system comprises a quality calculator 20, which calculates S4 an evaluation metric (e.g. the algorithm's credibility and confidence) based on the classification value 12, the assessment value and the training database 11. There is also a decision unit 21 which decides S5 whether concept drift has occurred. If there is no concept drift, the AUE can continue to test new samples. If sufficient concept drift has occurred, then the AUE can be retrained S6 and remedial action S7, e.g. manual classification, can be performed on the objects determined to be outside the scope of the training data. Such manual classified samples may be useful input to the retraining of the AUE.

It will be appreciated that the operations of the AUE and the evaluation system are likely asynchronous. This is because the calculation of the quality value of a given test object can be more computationally intensive than the classification of the object and because detection of concept drift, or at least sufficient concept drift to warrant further action, may require consideration of multiple objects. In view of this, the evaluation system may be configured with different settings to speed up the operation.

The invention has been described above in relation to specific embodiments, however the reader will appreciate that the invention is not so limited and can be embodied in different ways. For example, the invention can be implemented on a general-purpose computer but is particularly effective when implemented using highly-parallel processors such as GPUs, or other processors optimised for ML applications. The invention can be implemented on a standalone computer, e.g. a personal computer or workstation, a mobile phone or a tablet, or in a client-server environment as a hosted application. Multiple computers can be used to perform different steps of the method rather than all steps being carried out on a single computer. Output of the method of the invention can be displayed on any convenient display, printed to physical media, or stored in electronic form in any convenient file structure. A computer program embodying the invention, or parts thereof, can be a standalone software program, an update or extension to an existing program, or a callable function in a function library. The invention should not be limited except by the appended claims.

REFERENCES

[1] AHMADI, M., ULYANOV, D., SEMENOV, S., TROFIMOV, M., AND GIACINTO, G. Novel feature extraction, selection and fusion for effective malware family classification. In Proceedings of the Sixth ACM Conference on Data and Application Security and Privacy (New York, NY, USA, 2016), CODASPY '16, ACM, pp. 183-194.
[2] ARP, D., SPREITZENBARTH, M., HUBNER, M., GASCON, H. AND RIECK, K. DREBIN: effective and explainable detection of android malware in your pocket. In 21st Annual Network and Distributed System Security Symposium, NDSS 2014, San Diego, California, USA, February 23-26, 2014 (2014).¨
[3] DASH, S. K., SUAREZ-TANGIL, G., KHAN, S. J., TAM, K., AHMADI, M., KINDER, J., AND CAVALLARO, L. Droidscribe: Classifying android malware based on runtime behavior. In 2016 IEEE Security and Privacy Workshops, SP Workshops 2016, San Jose, CA, USA, May 22-26, 2016 (2016), pp. 252-261.
[4] DEO, A., DASH, S. K., SUAREZ-TANGIL, G., VOVK, V., AND CAVALLARO, L. Prescience: Probabilistic guidance on the retraining conundrum for malware detection. In Proceedings of the 2016 ACM Workshop on Artificial Intelligence and Security (New York, NY, USA, 2016), AISec '16, ACM, pp. 71-82.
[5] KAGGLE INC .Microsoft Malware Classification Challenge (BIG 2015). https://www.kaggle.com/c/malware-classification, 2015.
[6] KANTCHELIAN, A., AFROZ, S., HUANG, L., ISLAM, A. C., MILLER, B., TSCHANTZ, M. C., GREENSTADT, R., JOSEPH, A. D., AND TYGAR, J. D. Approaches to adversarial drift. In AISec' 13, Proceedings of the 2013 ACM Workshop on Artificial Intelligence and Security, Co-located with CCS 2013, Berlin, Germany, November 4, 2013 (2013), pp. 99-110.
[7] LINDORFER, M., NEUGSCHWANDTNER, M., AND PLATZER, C. MARVIN: efficient and comprehensive mobile app classification through static and dynamic analysis. In 39th IEEE Annual Computer Software and Applications Conference, COMPSAC 2015, Taichung, Taiwan, July 1-5, 2015. Volume 2 (2015),pp. 422-433.
[8] MAGGI, F., ROBERTSON, W. K., KRUGEL, C., AND VIGNA, G. Protecting a moving target: Addressing web application concept drift. In Recent Advances in Intrusion Detection, 12th International Symposium, RAID 2009, Saint-Malo, France, September 23-25, 2009. Proceedings (2009), pp. 21-40.
[9] VOVK, V , GAMMERMAN, A., AND SHAFER, G. Algorithmic learning in a random world. Springer-Verlag New York, Inc., 2005.
[10] THOMAS, K., GRIER, C., MA, J., PAXSON, V., AND SONG, D. Design and evaluation of a real-time URL spam filtering service. In 32nd IEEE Symposium on Security and Privacy, S&P 2011, 22-25 May 2011, Berkeley, California, USA (2011), pp. 447-462.

**Claims**

1. A computer-implemented method for monitoring the performance of a machine learning algorithm, the method comprising:

   using the machine learning algorithm to assess a plurality of test objects and provide respective classification values and assessment values;
   obtaining evaluation metrics for a plurality of the test objects, the evaluation metrics being statistical measures of the quality of the assessment of the machine learning algorithm; and
   detecting concept drift from the evaluation metrics.

2. A method according to claim 1 wherein the machine learning algorithm is a classifier and the evaluation metrics are confidence values that measure how much a respective test object is distinguishable from classes other than that to which it is assigned by the machine learning algorithm.

3. A method according to claim 1 or 2 wherein the machine learning algorithm is a classifier and the evaluation metrics are credibility values that measure how similar a respective test object is to other objects assigned to the same class by the machine learning algorithm.

4. A method according to claim 2 or 3 wherein the evaluation metrics are p-values.

5. A method according to any one of claims 1 to 4 wherein detecting concept drift comprises comparing the evaluation metrics to a quality threshold obtained from training data used to train the machine learning algorithm.

6. A method according to any one of claims 1 to 4 wherein detecting concept drift comprises detecting a decrease in evaluation metrics.

7. A method according to any one of the preceding claims wherein obtaining evaluation metrics is performed for a subset of the test objects.

8. A method according to any one of the preceding claims wherein the machine learning algorithm is a binary classifier.

9. A method according to any one of the preceding claims wherein the machine learning algorithm is a multi-class classifier.

10. A method according to any one of the preceding claims further comprising taking remedial action if the machine learning algorithm is suffering from concept drift.

11. A method according to claim 8 wherein the remedial action comprises one or more of: retraining the algorithm; adjusting a parameter of the machine learning algorithm.

12. A method according to any one of the preceding claims further comprising subjecting test objects for which a low quality value is obtained to further classification processing.

13. A computer program comprising instructions that, when executed by a computer system, cause the computer system to perform a method according to any one of the preceding claims.

14. A system comprising:

an assessment module comprising a machine learning algorithm configured to assess a plurality of test objects and provide respective classification values and assessment values; and
a monitoring module comprising an evaluator configured to obtain evaluation metrics for a plurality of the test objects, the evaluation metrics being statistical measures of the quality of the assessment of the machine learning algorithm; and a detector configured to detect concept drift from the evaluation metrics.

Fig. 1A

Fig. 1B

## Fig. 1C

Element discarded by p-value

Element discarded by probability

## Fig. 1D

Performance by P-value

Performance by Probability

## Fig. 2A

## Fig. 2B

Fig. 3A

Fig. 3B

## Fig. 3C

Given label malicious: probability malicious
Given label malicious: probability benign
Given label benign: probability malicious
Given label benign: probability benign

## Fig. 3D

Given label malicious: probability malicious
Given label malicious: probability benign
Given label benign: probability malicious
Given label benign: probability benign

## Fig. 4

Fig. 5A

Fig. 5B

Fig. 5C

Fig. 5D

Performance below threshold
by P-value

Fig. 5E

Performance below threshold
by Probability

Fig. 5F

Performance difference below threshold

Fig. 5G

Fig. 5H

Fig. 5I

Fig. 6

EP 3 422 262 A1

## Fig. 7

Fig. 8

EP 3 422 262 A1

Fig. 9

EP 3 422 262 A1

Fig. 10

Fig. 11

Europäisches
Patentamt

European
Patent Office

Office européen
des brevets

# EUROPEAN SEARCH REPORT

Application Number

EP 17 17 9159

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AMIT DEO ET AL: "Prescience : Probabilistic Guidance on the Retraining Conundrum for Malware Detection", ARTIFICIAL INTELLIGENCE AND SECURITY, 1 January 2016 (2016-01-01), pages 71-82, XP055431150, 2 Penn Plaza, Suite 701 New York NY 10121-0701 USA DOI: 10.1145/2996758.2996769 ISBN: 978-1-4503-4573-6 * abstract * * page 1, left-hand column, line 1 - page 3, line 59 * | 1-14 | INV. G06N99/00 |

-----

**TECHNICAL FIELDS SEARCHED (IPC)**

G06N

The present search report has been drawn up for all claims

| Place of search | Date of completion of the search | Examiner |
|---|---|---|
| The Hague | 1 December 2017 | Appeltant, Lennert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Novel feature extraction, selection and fusion for effective malware family classification. **AHMADI, M. ; ULYANOV, D. ; SEMENOV, S. ; TROFIMOV, M. ; GIACINTO, G.** In Proceedings of the Sixth ACM Conference on Data and Application Security and Privacy. ACM, 2016, 183-194
- **ARP, D. ; SPREITZENBARTH, M. ; HUBNER, M. ; GASCON, H. ; RIECK, K.** DREBIN: effective and explainable detection of android malware in your pocket. *21st Annual Network and Distributed System Security Symposium, NDSS 2014,* 20140223
- **DASH, S. K. ; SUAREZ-TANGIL, G. ; KHAN, S. J. ; TAM, K. ; AHMADI, M. ; KINDER, J. ; CAVALLARO, L.** Droidscribe: Classifying android malware based on runtime behavior. *2016 IEEE Security and Privacy Workshops, SP Workshops 2016,* 22 May 2016, 252-261
- Prescience: Probabilistic guidance on the retraining conundrum for malware detection. **DEO, A. ; DASH, S. K. ; SUAREZ -TANGIL, G. ; VOVK, V. ; CAVALLARO, L.** Proceedings of the 2016 ACM Workshop on Artificial Intelligence and Security. ACM, 71-82
- **KANTCHELIAN, A. ; AFROZ, S. ; HUANG, L. ; ISLAM, A. C. ; MILLER, B. ; TSCHANTZ, M. C. ; GREENSTADT, R. ; JOSEPH, A. D. ; TYGAR, J. D.** Approaches to adversarial drift. *AISec' 13, Proceedings of the 2013 ACM Workshop on Artificial Intelligence and Security,* 04 November 2013, 99-110
- **LINDORFER, M. ; NEUGSCHWANDTNER, M. ; PLATZER, C.** MARVIN: efficient and comprehensive mobile app classification through static and dynamic analysis. *39th IEEE Annual Computer Software and Applications Conference, COMPSAC 2015,* 01 July 2015, vol. 2, 422-433
- **MAGGI, F. ; ROBERTSON, W. K. ; KRUGEL, C. ; VIGNA, G.** Protecting a moving target: Addressing web application concept drift. *Recent Advances in Intrusion Detection, 12th International Symposium, RAID 2009,* 23 September 2009, 21-40
- **VOVK, V ; GAMMERMAN, A. ; SHAFER, G.** Algorithmic learning in a random world. Springer-Verlag New York, Inc, 2005
- **THOMAS, K. ; GRIER, C. ; MA, J. ; PAXSON, V. ; SONG, D.** Design and evaluation of a real-time URL spam filtering service. *32nd IEEE Symposium on Security and Privacy, S&P 2011,* 22 May 2011, 447-462